# EUROPÄISCHE PATENTSCHRIFT

(11) **EP 1 918 629 B1**
(45) Veröffentlichungstag und Bekanntmachung des Hinweises auf die Patenterteilung: **07.12.2011**
(21) Anmeldenummer: 07020141.3
(22) Anmeldetag: 15.10.2007
(51) Int. Cl.: F16P 3/14

(54) **Bearbeitungsmaschine**
Machining unit
Machine de traitement

(30) Priorität: 03.11.2006 DE 102006052017
(43) Veröffentlichungstag der Anmeldung: 07.05.2008
(73) Patentinhaber: Homag Holzbearbeitungssysteme AG, 72296 Schopfloch (DE)
(72) Erfinder: Gauss, Achim, 72280 Dornstetten/Hallwangen (DE); Gringel, Martin, 72379 Hechingen (DE); Schroth, Georg, 72172 Sulz (DE); Kanitz, Carsten, 72108 Rottenburg (DE)
(74) Vertreter: HOFFMANN EITLE

(56) Entgegenhaltungen:
- EP-A- 1 323 503
- EP-A- 1 482 238
- WO-A-2006/024431
- DE-A1- 3 243 822
- DE-U1-202004 001 623
- GB-A- 1 212 855
- US-A1- 2002 020 263

## Beschreibung

### Technisches Gebiet

Die Erfindung betrifft eine Bearbeitungsmaschine nach dem Oberbegriff von Anspruch 1.

### Stand der Technik

Bearbeitungsmaschinen der eingangs genannten Art werden verbreitet im Bereich der Möbel- oder Bauzulieferindustrie (z.B. zur Herstellung von Holztreppen) eingesetzt. Bei diesen Maschinen ist meist die Bearbeitungseinheit, gegebenenfalls aber auch die Werkstückspanneinheit oder beide Einheiten verfahrbar ausgestaltet. Um während des Verfahr- bzw. Bearbeitungsbetriebes der entsprechenden Maschineneinheiten Gefährdungen von Personen auszuschließen, weisen bekannte Bearbeitungsmaschinen verschiedene Schutzeinrichtungen auf, beispielsweise einen umlaufenden Schutzzaun mit einer Tür, oder dergleichen. Allerdings besteht auch in manchen Situationen die Notwendigkeit, während des Betriebes der Bearbeitungsmaschine an die Maschineneinheiten heranzutreten, beispielsweise um den Bearbeitungsbetrieb zu überwachen. Vor diesem Hintergrund ist es bekannt, eine oder mehrere Maschineneinheiten mit Kontaktsensoren zu versehen, die den Betrieb oder zumindest die Verfahrbewegung der Maschineneinheiten anhalten, sobald ein Kontakt mit einem Gegenstand bzw. einer Person festgestellt wird.

Bei derartigen Konstruktionen sind jedoch nur vergleichsweise geringe Arbeitsgeschwindigkeiten von beispielsweise < 40 m/min zugelassen, um beim Aufprall des Kontaktsensors eine Verletzung auszuschließen.

Als Alternative zu Kontaktsensoren sind Lichtschranken bekannt, die den Betrieb bzw. die Verfahrbewegung der Maschineneinheiten anhalten, sobald ein Gegenstand bzw. eine Person in den durch die Lichtschranke überwachten Bereich eindringt. Mit diesem System ist es jedoch nicht möglich, den Betrieb der Bearbeitungsmaschine aus der Nähe zu beobachten, da bei entsprechender Annäherung der Betrieb der Maschine sofort gestoppt wird. Ferner führt bei derartigen Systemen ein ungewolltes Eindringen in den Überwachungsbereich der Lichtschranke zu einem unerwünschten Maschinenstillstand und entsprechendem Aufwand, den Betrieb der Bearbeitungsmaschine wieder hochzufahren

Die EP 1482238A2 offenbart ein Sicherheitsystem für eine Bearbeitungsmaschine, das die Annäherung der Personen erkennen kann. Die WO 2006/024431 offenbart ein Handhabungsgerät, bei welchem Sicherheitssensoren an einer Roboterbasis angebracht sind, so dass der Arbeitsraum des Roboters von der Basis ausgehend von innen nach außen überwacht wird.

### Darstellung der Erfindung

Der Erfindung liegt die Aufgabe zugrunde, eine Bearbeitungsmaschine der eingangs genannten Art bereitzustellen, dem einen kontinuierlichen und gleichzeitig zügigen und sicheren Betrieb ermöglicht.

Diese Aufgabe wird erfindungsgemäß durch eine Bearbeitungsmaschine mit dem Merkmal von Anspruch 1 gelöst. Besonders bevorzugte Ausführungsformen der Erfindung sind in den anhängigen Ansprüchen angegeben.

Der Erfindung liegt der Gedanke zugrunde, die Annäherung eines Gegenstands oder einer Person an die Maschineneinheiten möglichst frühzeitig zu erfassen, ohne dass dies einen Stillstand der Maschine verursachen muss. Zu diesem Zweck ist erfindungsgemäß vorgesehen, das die gattungsgemäße Bearbeitungsmaschine ferner mindestens einen kontaktlos arbeitenden Sensor aufweist, der eingerichtet ist, in einen vorbestimmten Bereich eindringende Gegenstände zu erfassen,

Durch den erfindungsgemäßen Aufbau der Bearbeitungsmaschine wird erstmals ein zweistufiges Sicherheitskonzept ermöglicht, bei welchem der kontaktlos arbeitende Sensor eine Vorerfassung sich annähernder Gegenstände ausführt, die noch nicht zum Stillstand der Maschine führen muss, und bei welchem ein Stillstand der Maschine bzw. eine Beendigung der Verfahrbewegung erst ausgelöst wird, wenn der mindestens eine Kontaktsensor auf einen Gegenstand trifft, obgleich die Erfindung nicht auf diese Betriebsweise beschränkt ist.

Die Sensoren können im Rahmen der Erfindung prinzipiell an beliebigen Stellen angeordnet sein. Um jedoch den Verfahrbetrieb der jeweiligen Maschineneinheit besonders effizient überwachen zu können, ist gemäß einer Weiterbildung der Erfindung vorgesehen, dass mindestens ein Kontaktsensor und/oder mindestens ein kontaktlos arbeitender Sensor an einer verfahrbaren Maschineneinheit vorgesehen ist.

Der mindestens eine kontaktlos arbeitende Sensor kann im Rahmen der vorliegenden Erfindung auf unterschiedlichste Art und Weise ausgestaltet sein. Im Hinblick auf eine schnelle, präzise und störungsfreie Erfassung hatte sich jedoch als vorteilhaft erwiesen, dass mindestens ein kontaktlos arbeitender Sensor ausgewählt ist aus Lasersensor, Infrarotsensor, Ultraschallsensor, Lasertriangulationssensor und Bilderfassungssensor. Bei dem Bilderfassungsensor kann es sich beispielsweise um eine Kamera wie eine Digitalkamera oder CCD-Kamera handeln, welche die Anwesenheit eines Gegenstands beispielsweise auf der Grundlage eines Soll-/Ist-Vergleichs beurteilt.

In ähnlicher Weise ist auch die Ausgestaltung des mindestens einen Kontaktsensors im Rahmen der Erfindung nicht besonders beschränkt, obgleich sich Druckschalter, Druckschalterleisten und so genannte Bumper als besonders vorteilhaft erwiesen haben.

Um auch im Umfeld schmutzbehafteter Bearbeitungen wie beispielsweise spanender Bearbeitungen einen zuverlässigen Betrieb des mindestens einen kontaktlos arbeitenden Sensors sicherzustellen, ist gemäß einer Weiterbildung der Erfindung vorgesehen, dass die Bearbeitungsmaschine ferner eine Reinigungseinrichtung für den mindestens einen kontaktlos arbeitenden Sensor aufweist, insbesondere eine Abblaseinrichtung.

Gemäß einer Weiterbildung der Erfindung besitzt die Bearbeitungsmaschine ferner eine Steuereinrichtung, die eingerichtet ist, eine Bewegungsgeschwindigkeit der mindestens einen bewegten Maschineneinheit auf eine niedrigere, positive Bewegungsgeschwindigkeit zu vermindern, wenn der mindestens eine kontaktlos arbeitende Sensor einen in den vorbestimmten Bereich eindringenden Gegenstand erfasst. Hierdurch wird der bereits oben angesprochene, zweistufige Betrieb der Bearbeitungsmaschine auf besonders effiziente Weise ermöglicht, so dass die Maschine mit einer sehr hohen Verfahrgeschwindigkeit arbeiten kann und gleichzeitig der Betrieb der Maschine nicht automatisch unterbrochen wird, wenn sich ein Gegenstand bzw. eine Person nähert. Vielmehr kann der Betrieb der Maschine mit einer im Vergleich zur "Höchstgeschwindigkeit" niedrigen Geschwindigkeit fortgesetzt werden, obgleich der Kontakt der mindestens eine kontaktlos arbeitende Sensor einen Gegenstand erfasst hat. Auf diese Weise kann beispielsweise eine Bedienperson den Betrieb der Bearbeitungsmaschine aus nächster Nähe beobachten und überwachen. Gleichzeitig wird ein hohes Sicherheitsniveau beibehalten.

Um das Sicherheitsniveau weiter zu erhöhen, ist vorgesehen, dass mindestens eine Maschineneinheit, insbesondere Bearbeitungseinheit, eine

Schutzhaube aufweist, welche die jeweilige Maschineneinheit zumindest teilweise umschließt. Auf diese Weise wird sichergestellt, dass eine Bedienperson den Betrieb der Maschine beobachten, jedoch nicht in gefährliche Bereiche wie beispielsweise in den Bereich von Bearbeitungsaggregaten eingreifen kann. Dabei ist an der (mindestens einen) Schutzhaube mindestens ein Kontaktsensor und/oder kontaktlos arbeitender Sensor angeordnet.

Der bereits oben diskutierte, zweistufige Betrieb der erfindungsgemäßen Vorrichtung ist Gegenstand des Verfahrens gemäß Anspruch 8, mit dessen sich die bereits oben diskutierten Vorteile besonders ausgeprägt erzielen lassen.

### Kurze Beschreibung der Zeichnungen

Figur 1 zeigt schematisch eine Seitenansicht einer erfindungsgemäßen Bearbeitungsmaschine;
Figur 2 zeigt schematisch eine Draufsicht der in Figur 1 gezeigten Bearbeitungsmaschine mit weiteren Bauteilen.

### Ausführliche Beschreibung bevorzugter Ausführungsformen

Bevorzugte Ausführungsformen der Erfindung werden nachfolgend ausführlich in Bezugnahme auf die begleitenden Zeichnungen beschrieben.

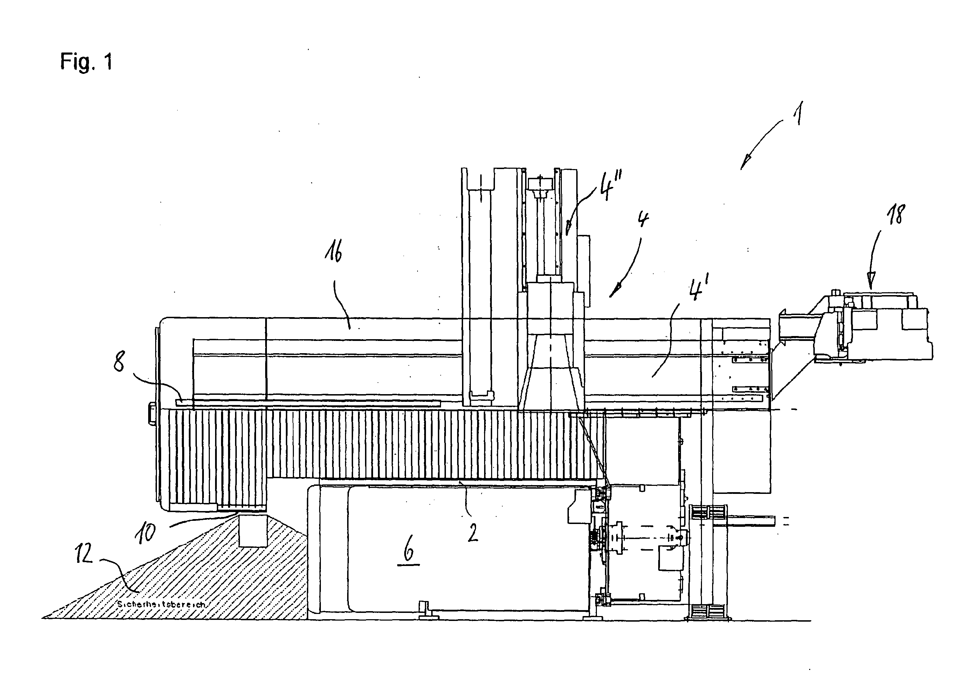

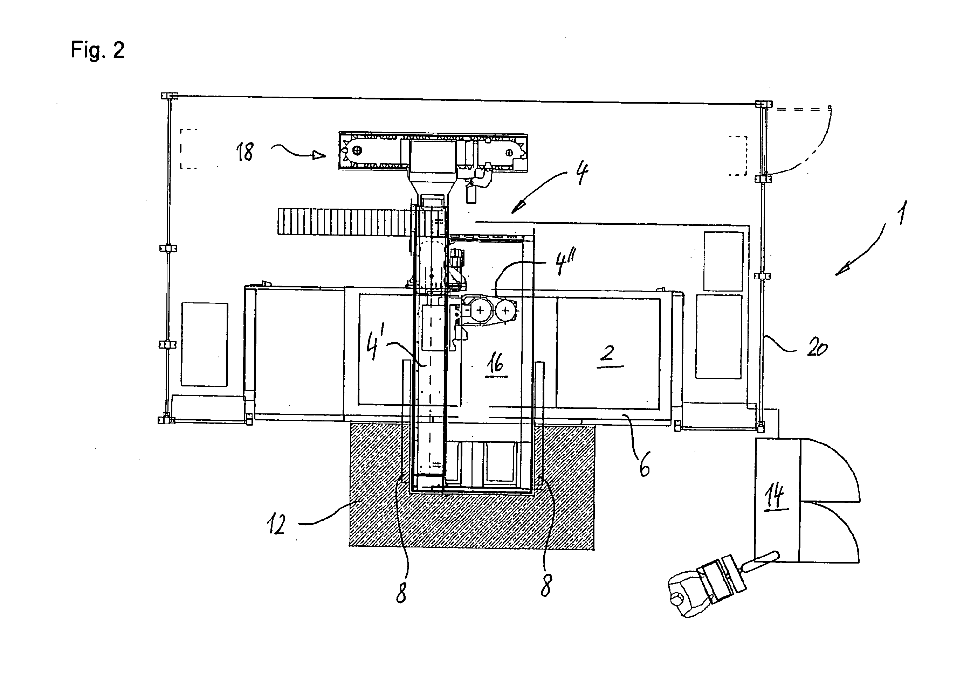

Die Bearbeitungsmaschine 1 als bevorzugte Ausführungsform der vorliegenden Erfindung ist in Figur 1 schematisch in einer Seitenansicht und in Figur 2 schematisch in einer Draufsicht gezeigt. Die Bearbeitungsmaschine 1 die in den der vorliegenden Ausführungsform zum Bearbeiten von plattenförmigen Werkstücken 2, die beispielsweise zumindest teilweise aus Holz, Holzwerkstoffen oder dergleichen bestehen, wie sie im Bereich der Möbel- oder Bauzulieferindustrie häufig benötigt werden.

Die Bearbeitungsmaschine 1 besitzt eine Bearbeitungseinheit 4, die in der vorliegenden Ausführungsform einen in einer x-Richtung (von links nach rechts in Figur 2) verfahrbaren Ausleger 4' aufweist, obgleich es sich hierbei beispielsweise auch um ein Portal oder eine andere Führungseinrichtung handeln kann. An dem Ausleger 4' ist ein Bearbeitungsagregat 42' derart vorgesehen, dass es entlang des Auslegers 4' und somit in y-Richtung sowie in einer z-Richtung (senkrecht zu Zeichenebene von Figur 2) verfahrbar ist. Das Bearbeitungsagregat 42' kann beispielsweise dazu ausgelegt sein, spanende Bearbeitungen an den plattenförmigen Werkstücken 2 aufzuführen oder diese mit einer Kante zu versehen.

An hinteren Ende des Auslegers 4' ist ein Werkzeugmagazin 18 vorgesehen, mittels dessen Bearbeitungswerkzeuge (oder gegebenenfalls Bearbeitungsagregate) in das Bearbeitungsagregat 42' eingewechselt werden können.

Ferner besitzt die Bearbeitungsmaschine 1 einen Werkstückspanntisch 6, der unterhalb des Auslegers 4' in dessen Verfahrbereich angeordnet und dazu vorgesehen ist, die Werkstücke 2 während der Bearbeitung zu halten. Obgleich der Werkstücksspanntisch 6 in der vorliegenden Ausführungform stationär angeordnet ist, kann dieser alternativ oder zusätzlich zu dem Ausleger 4' verfahrbar sein.

Wie in Figur 2 am besten zu erkennen ist, ist ein Großteil der Bearbeitungsmaschine 1 durch einen Schutzzaun 20 umgeben, so dass nur ein begrenzter Bereich der Bearbeitungsmaschine 1 zugänglich ist und einer sicherheitstechnischen Überwachung unterworfen werden muss.

Ferner besitzt die Bearbeitungsmaschine 1 eine Schutzhaube 16, welche die Bearbeitungseinheit 4 zumindest teilweise derart umschließt, dass zumindest neben der Maschine stehende Personen darin gehindert sind, in den Bereich des Bearbeitungsagregats 42' einzugreifen. An der Schutzhaube 16 sind in der vorliegenden Ausführungsform zwei Kontaktleisten 8 angeordnet, und zwar auf gegenüberliegenden Seitenflächen, wie in Figur 2 am besten zu erkennen ist. Darüber hinaus sind in der vorliegenden Ausführungsform an der Unterseite der Schutzhaube 16 zwei (mindestens ein) kontaktlos arbeitende Sensoren 10 vorgesehen, die derart angeordnet sind, dass sie einen unterhalb und schräg vor dem freien Ende des Auslegers 4' liegenden Bereich 12 erfassen, der in Figuren 1 und 2 gestrichelt dargestellt ist.

Bei den kontaktlos arbeitenden Sensoren handelt es sich in der vorliegenden Ausführungsform um Lasersensoren, obgleich auch, wie oben bereits erwähnt, andersartige zum Einsatz kommen können. In den Figuren nicht gezeigt ist eine in der vorliegenden Ausführungsform ebenfalls vorgesehene Ablasseinrichtung für die kontaktlos arbeitenden Sensoren 10, die dazu vorgesehen ist, die Sensoren bei Bedarf zu reinigen und gegebenenfalls den Verschmutzungszustand der Sensoren 10 überwachen.

Wie in Figur 2 zu erkennen ist, weist die Bearbeitungsmaschine 1 ferner eine Steuereinrichtung 14 auf, auf die eine Bedienperson zugreifen kann, um den Betrieb der Maschine zu steuern. Dabei ist die Steuereinrichtung 14 beispielsweise eingerichtet, folgenden Betrieb der erfindungsgemäßen Bearbeitungsmaschine 1 zu steuern.

Während des Betriebes der Bearbeitungsmaschine 1 führt das Bearbeitungsagregat 42' Bearbeitungen an den Werkstücken 2 aus, während es durch eine Verfahrbewegung des Auslegers 4' und gegebenenfalls eine Verfahrbewegung entlang des Auslegers 4' in Bezug auf die Werkstücke 2 verfahren wird. Um die Bearbeitungszeit zu verkürzen, wird der Ausleger 4' dabei mit einer möglichst hohen Betriebsgeschwindigkeit verfahren. Gleichzeitig führen sowohl die Sensoren 8 als auch die Sensoren 10 kontinuierlich einen Überwachungsbetrieb aus.

Sobald mindestens einer der kontaktlos arbeitenden Sensoren 10 einen in den vorbestimmten Bereich 12 eindringenden Gegenstand (meist eine Person) erfasst, gibt der Sensor 10 ein entsprechendes Signal an die Steuereinrichtung 14 weiter. Auf dieser Grundlage sorgt die Steuereinrichtung 14 dafür, dass die Bewegungsgeschwindigkeit des Auslegers 4' in x-Richtung (von links nach rechts in Figur 2 oder umgekehrt) von der vergleichsweisen hohen Bewegungsgeschwindigkeit im Normalbetrieb auf eine niedrigere, positive Bewegungsgeschwindigkeit vermindert wird. Mit dieser verminderten Bewegungsgeschwindigkeit kann die Bearbeitungsmaschine 1 uneingeschränkt weiterarbeiten, solange die Kontaktsensoren 8 keinen Kontakt mit einer Person oder einem sonstigen Gegenstand erfassen. Erst in letzterem Falle wird zumindest die Verfahrbewegung des Auslegers 4' oder gegebenenfalls auch der Betrieb der gesamten Maschine gestoppt.

## Patentansprüche

1. Bearbeitungsmaschine (1) zum Bearbeiten von Werkstücken (2), die bevorzugt zumindest teilweise aus Holz, Holzwerkstoffen oder dergleichen bestehen, mit:
einer Mehrzahl von Maschineneinheiten einschließlich mindestens einer Bearbeitungseinheit (4) und mindestens einer Werkstückspanneinheit (6), von denen mindestens eine verfahrbar ist, und
mindestens einem Kontaktsensor (8), der an mindestens einer Maschineneinheit angeordnet ist,
mindestens einem kontaktlos arbeitenden Sensor (10), der eingerichtet ist, in einen vorbestimmten Bereich (12) eindringende Gegenstände zu erfassen,
**dadurch gekennzeichnet, dass**
die Bearbeitungsmaschine (1) aufgrund eines Signals des kontaktlos arbeitenden Sensors (10) mit einer verminderten Bewegungsgeschwindigkeit weiterarbeitet,
und
komplett gestoppt wird, wenn der mindestens eine Kontaktsensor (8) einen Kontakt mit einer Person oder einem anderen Gegenstand detektiert.

2. Bearbeitungsmaschine nach Anspruch 1, **dadurch gekennzeichnet, dass** mindestens ein Kontaktsensor (8) und/oder mindestens ein kontaktlos arbeitenden Sensor (10) an einer verfahrbaren Maschineneinheit vorgesehen ist.

3. Bearbeitungsmaschine nach Anspruch 1 oder 2, **dadurch gekennzeichnet, dass** mindestens ein kontaktlos arbeitender Sensor (10) ausgewählt ist aus Lasersensor, Infrarotsensor, Ultraschallsensor, Lasertriangulationssensor und Bilderfassungssensor.

4. Bearbeitungsmaschine nach einem der vorhergehenden Ansprüche, **dadurch gekennzeichnet, dass** mindestens ein Kontaktsensor (8) ausgewählt ist aus Druckschalter, Druckschalterleiste und Bumper.

5. Bearbeitungsmaschine nach einem der vorhergehenden Ansprüche, **dadurch gekennzeichnet, dass** sie ferner eine Reinigungseinrichtung für den mindestens einen kontaktlos arbeitenden Sensor aufweist, insbesondere eine Abblaseinrichtung.

6. Bearbeitungsmaschine nach einem der vorhergehenden Ansprüche, **dadurch gekennzeichnet, dass** sie ferner eine Steuereinrichtung (14) aufweist, die eingerichtet ist, eine Bewegungsgeschwindigkeit der mindestens einen bewegten Maschineneinheit auf eine niedrigere, positive Bewegungsgeschwindigkeit zu vermindern, wenn der mindestens eine kontaktlos arbeitende Sensor (10) einen in den vorbestimmten Bereich (12) eindringenden Gegenstand erfasst.

7. Bearbeitungsmaschine nach einem der vorhergehenden Ansprüche, **dadurch gekennzeichnet, dass** mindestens eine Maschineneinheit, insbesondere Bearbeitungseinheit, eine Schutzhaube (16) aufweist, welche die jeweilige Maschineneinheit zumindest teilweise umschließt und bevorzugt mindestens einen Kontaktsensor (8) und/oder kontaktlos arbeitenden Sensor (10) aufweist.

8. Verfahren zum sicheren Betreiben einer Bearbeitungsmaschine (1) nach einem der vorhergehenden Ansprüche, mit den Schritten:
Verfahren mindestens einer Maschineneinheit mit einer vorbestimmten Bewegungsgeschwindigkeit, und
Vermindern der Bewegungsgeschwindigkeit auf eine niedrigere, positive Bewegungsgeschwindigkeit, wenn der mindestens eine kontaktlos arbeitende Sensor (10) einen in den vorbestimmten Bereich eindringenden Gegenstand erfasst.

## Claims

1. Machining apparatus (1) for machining workpieces (2) which are preferably at least partially made of wood, derived timber products or the like, having:
a plurality of machine units including at least one machining unit (4) and at least one workpiece clamping unit (6), at least one of which is movable, and
at least one contact sensor (8) which is arranged on at least one machine unit,
at least one contactlessly operating sensor (10) which is designed to detect objects entering a predetermined region (12),
**characterised in that**
the machining apparatus (1) operates further at a reduced speed of movement on the basis of a signal of the contactlessly operating sensor (10), and
is stopped completely when the at least one contact sensor (8) detects contact with a person or another object.

2. Machining apparatus according to claim 1, **characterised in that** at least one contact sensor (8) and/or at least one contactlessly operating sensor (10) is provided on a movable machine unit.

3. Machining apparatus according to claim 1 or 2, **characterised in that** at least one contactlessly operating sensor (10) is selected from laser sensor, infrared sensor, ultrasound sensor, laser triangulation sensor and image detection sensor.

4. Machining apparatus according to any of the preceding claims, **characterised in that** at least one contact sensor (8) is selected from pressure switch, pressure switch bar and bumper.

5. Machining apparatus according to any of the preceding claims, **characterised in that** it further has a cleaning device for the at least one contactlessly operating sensor, in particular a blower device.

6. Machining apparatus according to any of the preceding claims, **characterised in that** it further has a control device (14) which is designed to reduce a speed of movement of the at least one moving machine unit to a lower, positive speed of movement when the at least one contactlessly operating sensor (10) detects an object entering the predetermined region (12).

7. Machining apparatus according to any of the preceding claims, **characterised in that** at least one machine unit, in particular machining unit, has a protective hood (16) which at least partially surrounds the respective machine unit and preferably has at least one contact sensor (8) and/or contactlessly operating sensor (10).

8. Method for reliably operating a machining apparatus (1) according to any of the preceding claims, having the steps of:
moving at least one machine unit at a predetermined speed of movement, and
reducing the speed of movement to a lower, positive speed of movement when the at least one contactlessly operating sensor (10) detects an object entering the predetermined region.

## Revendications

1. Machine de traitement (1), pour l'usinage de pièces d'oeuvre (2), composées de préférence, au moins partiellement, de bois, matériaux ligneux ou analogue, avec :
une pluralité d'unités machine, y compris au moins une unité d'usinage (4) et au moins une unité de bridage de pièce d'oeuvre (6), dont au moins l'une est déplaçable, et
au moins un capteur à contact (8), disposé sur au moins une unité machine,
au moins un capteur (10) travaillant sans contact, agencé pour appréhender des objets pénétrant dans une zone (12) prédéterminée,
**caractérisée en ce que**
la machine de traitement (1) continue à travailler à une vitesse de déplacement diminuée, du fait d'un signal du capteur (10) travaillant sans contact, et
elle est complètement stoppée, lorsque le au moins un capteur à contact (8) détecte un contact avec une personne ou un autre objet.

2. Machine de traitement selon la revendication 1, **caractérisée en ce que** le au moins un capteur à contact (8) et/ou au moins un capteur (10) travaillant sans contact est/sont prévu(s) sur une unité machine déplaçable.

3. Machine de traitement selon la revendication 1 ou 2, **caractérisée en ce qu'**au moins un capteur (10) travaillant sans contact est sélectionné parmi un capteur à laser, un capteur à infra-rouge, un capteur à ultra-sons, un capteur à triangulation à laser et un capteur de détection d'image.

4. Machine de traitement selon l'une des revendications précédentes, **caractérisée en ce que** le au moins un capteur à contact (8) est sélectionné parmi un interrupteur à pression, une bande d'interrupteurs à pression et des butoirs.

5. Machine de traitement selon l'une des revendications précédentes, **caractérisée en ce qu'**elle présente en outre un dispositif de nettoyage pour le au moins un capteur travaillant sans contact, en particulier un dispositif de nettoyage par soufflage.

6. Machine de traitement selon l'une des revendications précédentes, **caractérisée en ce qu'**elle présente en outre un dispositif de commande (14), agencé pour diminuer une vitesse de déplacement de la au moins une unité machine déplacée, jusqu'à une vitesse de déplacement positive, plus faible, lorsque le au moins un capteur (10) travaillant sans contact appréhende un objet pénétrant dans la zone (12) prédéterminée.

7. Machine de traitement selon l'une des revendications précédentes, **caractérisée en ce qu'**au moins une unité machine, en particulier une unité d'usinage, présente un capot de protection (16), entourant au moins partiellement l'unité machine respective et présentant de préférence au moins un capteur à contact (8) et/ou au moins un capteur (10) travaillant sans contact.

8. Procédé pour assurer le fonctionnement sûr d'une machine de traitement (1) selon l'une des revendications précédentes, comprenant les étapes suivantes :
déplacement d'au moins une unité machine à une vitesse de déplacement prédéterminée, et
diminution de la vitesse de déplacement jusqu'à une vitesse de déplacement positive, plus faible, lorsque le au moins un capteur (10) travaillant sans contact appréhende un objet pénétrant dans la zone prédéterminée.
